# EUROPEAN PATENT APPLICATION

(11) **EP 2 466 866 A1**
(43) Date of publication of application: **20.06.2012**
(21) Application number: 10306415.0
(22) Date of filing: 15.12.2010
(51) Int. Cl.: H04M 15/00, H04W 4/24

(54) **Unlimited usage policy-based charging system and method**

(71) Applicant: Alcatel Lucent, 75007 Paris (FR)
(72) Inventor: Saker, Daniel, 91620 Nozay (FR)
(74) Representative: Gabriel, Franck

(57) **Abstract**

A policy-based charging system for charging telecommunication network usage by a user in a telecommunication network architecture comprising a policy and charging enforcement function (PCEF) entity, a policy control and charging rules function (PCRF) entity and an online charging system (OCS), the policy and charging enforcement function (PCEF) entity being coupled to the policy control and charging rules function (PCRF) entity and to the online charging system (OCS), wherein the policy and charging enforcement function (PCEF) entity is arranged to not trigger the online charging system (OCS) for any chargeable event related to an user session related to an unlimited usage.

## Description

An aspect of the invention relates to a policy-based charging system in a telecommunication network infrastructure for handling session of user having unlimited usage. The invention further relates to an unlimited usage policy-based charging method, a computer software product, and entities of a telecommunication network executing the policy-based charging.

Such a method and system find a particular, though non exclusive, application in telecommunication networks, for example 2^{nd}, 3^{rd} and 4^{th} generation network like 2G, 3G, or LTE (Long Term Evolution) networks.

The market's adoption of the mobile devices like the smart-phones and enhanced broadband access capacities for other connected devices and laptops (using Wireless Fidelity WiFi, 3G Universal Serial Bus USB) has contributed to the stimulation of mobile multimedia services usage. Mobile multimedia services expand to data applications such as Voice Over Internet Protocol VoIP, Internet Protocol Television IPTV, Video On Demand VOD, interactive gaming, and social networking, etc.... This results in an explosion of data traffic, a high demand for bandwidth and finally to a congestion in the network which infrastructure is not able to support the corresponding data traffic deluge. The fierce competition between telecommunication operators led them to propose attractive unlimited data plans in flat fee schemes (prepaid or postpaid) in order to attract or retain subscribers.

Further, the telecommunication operators are moving towards a model where they are precisely controlling network usage to reduce network infrastructure investment while securing additional revenue by offering personalized broadband services tailored specifically to the subscriber's preferences and performance requirements. Policy-based charging enables to dynamically control network bandwidth and quality of service QoS according to the subscriber's service tier and entitlements. This implies real time interaction between various entities of the telecommunication network such as the Gateway General Packet Radio Service (GPRS) Support Node GGSN, the LTE Packet Gateway PGW, the Deep Packet Inspection DPI, the policy manager, and the subscriber data and charging systems (like the Online Charging System OCS, or the Operations Support System OSS or the Business Support System BSS). In order to implement the policy-based charging, the subscriber data and charging system, for example the online charging system OCS must support all the sessions that have been initiated by the various subscribers requesting the services offered by the telecommunication operator. In particular, the online charging system OCS receives all the charging requests for all chargeable events occurring during a session, regardless of the type of usage made by the user (unlimited or limited). This policy-based charging mechanism could lead the online charging system OCS to not be able to support the corresponding overload. As a consequence, the system may reject handling calls that are not related to unlimited usage resulting in a loss of revenues for the telecommunication operator. Thus, the effective handling of unlimited subscriptions requires from the telecommunication operators to extend the capacity of their online payment systems. However, this is not satisfactory because it implies additional investment on the infrastructure.

It is an object of the invention to propose a policy-based charging method or system that overcome the above mentioned drawbacks, and in particular improve the policy-based charging method or system capability to efficiently handle chargeable events generated by users having unlimited usage, for example by having subscribed to unlimited subscription or by accessing free data services.

According to one aspect, there is provided a policy-based charging system for charging telecommunication network usage by a user in a telecommunication network architecture comprising a policy and charging enforcement function entity, a policy control and charging rules function entity and an online charging system, the policy and charging enforcement function entity being coupled to the policy control and charging rules function entity and to the online charging system, wherein the policy and charging enforcement function entity is arranged to not trigger the online charging system for any chargeable event related to an user session related to an unlimited usage.

The policy control and charging rules function entity may be arranged to provide a charging instruction to the policy and charging enforcement function entity to not trigger the online charging system for any chargeable event related to an user session related to an unlimited usage.

The policy control and charging rules function entity may be coupled to the online charging system through a direct interface, the direct interface being adapted to transmit a notification from the online charging system to the policy control and charging rules function entity when the unlimited usage is activated, suspended or renewed.

The direct interface may be a Diameter protocol based interface or a SOAP protocol based interface.

According to a further aspect, there is provided a policy control and charging rules function entity of a policy-based charging system according to the invention.

According to another aspect, there is provided an online charging system of a policy-based charging system according to the invention.

According to another aspect, there is provided a policy and charging enforcement function entity of a policy-based charging system according to the invention.

According to a further aspect, there is provided a policy-based charging method for charging telecommunication network usage by a user in a telecommunication network architecture comprising a policy and charging enforcement function, a policy control and charging rules function and an online charging system, the policy and charging enforcement function being coupled to the policy control and charging rules function and to the online charging system, wherein the policy and charging enforcement function do not trigger the online charging system for any chargeable event related to an user session related to an unlimited usage.

The unlimited usage may be related to an unlimited subscription, or a free data service, or a free uniform resource locator URL, or a sponsored data service, or a sponsored uniform resource locator URL.

The policy control and charging rules function may provide a charging instruction to the policy and charging enforcement function to not trigger the online charging system for any chargeable event related to an user session related to an unlimited usage.

The unlimited usage may be separately provisioned in the online charging system and in the policy control and charging rules function by means of at least one application, or a customer relationship management mechanism, or a self-care mechanism, or a scheduling mechanism.

The policy control and charging rules function may be directly coupled to the online charging system, and a notification may be transmitted from the online charging system to the policy control and charging rules function when the unlimited usage is activated, suspended or renewed.

The unlimited usage provisioned in the online charging system and in the policy control and charging rules function may be matched based on a rating group identification.

According to still a further aspect, there is provided a computer program for a policy-based charging system, the system comprising at least a policy and charging enforcement function entity, a policy control and charging rules function entity and an online charging system entity that are coupled to each other in a telecommunication network architecture, the computer program product comprising a set of instructions that, when loaded into a program memory of and run by anyone of the entities of the policy-based charging system, causes the system to carry out the steps of the policy-based charging method of the invention.

The system and method of the invention enable a better resource allocation for managing all the session and the corresponding OCS instances during the charging processes. The number of exchanges between the network elements involved in accounting for chargeable events is reduced. Having a specific handling of the unlimited usage in the charging mechanism enables the operator to cope with the increasing data traffic, and to move towards online data charging for largest segment of subscribers' database without this constituting an overload for the online payment system or without necessitating any further investment on the infrastructure.

Further, with the invention, the online payment system availability and capacity is improved. Indeed, the online payment system being not overloaded, the online payment system can focus on handling charging requests not related to unlimited usage. Thus, the system is able to further handle calls not related to unlimited usage and avoid operators to miss additional revenues generated by such calls.

Other advantages will become apparent from the hereinafter description of the invention.

The present invention is illustrated by way of examples and not limited to the accompanying drawings, in which like references indicate similar elements:
- Figure 1 is a block diagram schematically and partially illustrating a telecommunication networks architecture for providing extended multimedia services to users of mobile radio-communication terminals;
- Figure 2 is a block diagram schematically illustrating an embodiment of the policy-based charging system and method; and
- Figure 3 is a block diagram schematically illustrating an embodiment of the policy-based charging method.

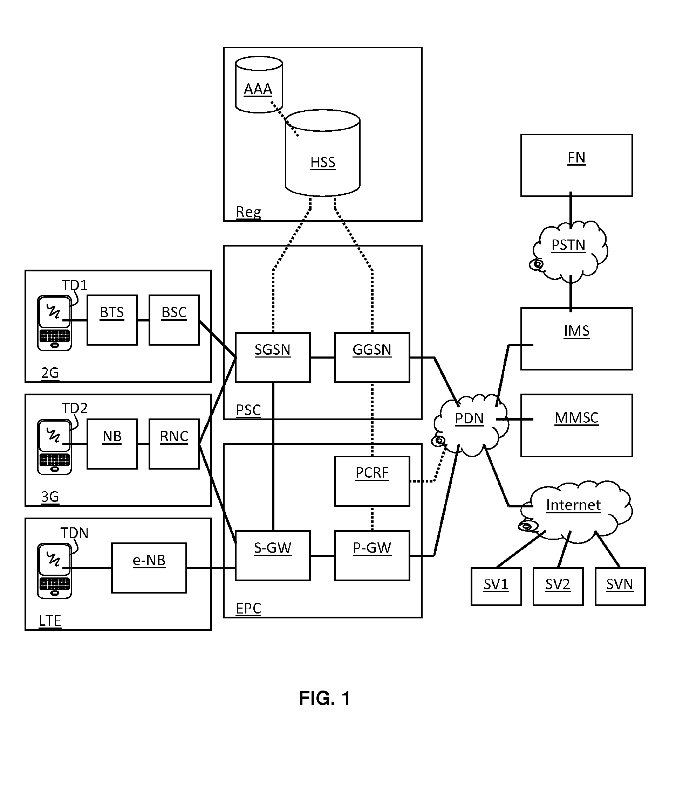

Figure 1 is a block diagram schematically and partially illustrating an example of telecommunication networks architecture with the various layers involved (from the access, transport, control, to application layers) for providing extended multimedia services to users of mobile radio-communication terminals TD1, TD2 ...TDN.

In a 2G telecommunication network, accessing to the services offered by a telecommunication operator involves a base transceiver station BTS and a base station controller BSC.

In a 3G telecommunication network, accessing to the services offered by a telecommunication operator involves a node-B referred as NB and a radio network controller RNC.

In a 4G/LTE telecommunication network, accessing to the services offered by a telecommunication operator involves an e-UTRAN (Universal Terrestrial Radio Access Network) node-B referred as e-NB.

The 2G telecommunication network interacts with the Serving GPRS (General Packet Radio Service) Support Node SGSN of the Packet Switched Core PSC. The 3G telecommunication network interacts with the SGSN of the PSC and also with the Serving Gateway S-GW of the Evolved Packet Core EPC. The 4G/LTE telecommunication network interacts with the S-GW of the EPC.

In the evolved packet core EPC, the serving gateway S-GW is coupled to the PDN (Packet Date Network) Gateway P-GW.

In the packet switched core PSC, the serving GPRS support node SGSN is coupled to the Gateway GPRS Support Node GGSN. The serving GPRS support node SGSN and the gateway GPRS support node GGSN are further coupled to register Reg comprising various databases servers, like Home Subscriber Server HSS, Admission, Authorization & Accounting AAA server.

Both, the PDN gateway P-GW and the gateway GPRS support node GGSN are coupled to the packet data network PDN. The packet data network PDN may be coupled to various source of telecommunication services, for example to servers providing services SV1, SV2 ...SVN through the Internet, or to Multimedia Message Service Center MMSC, or to IP (Internet Protocol) Multimedia Subsystem IMS. The IP multimedia subsystem IMS may be further coupled to a fixed network FN through a Public Switched Telephone Network PSTN.

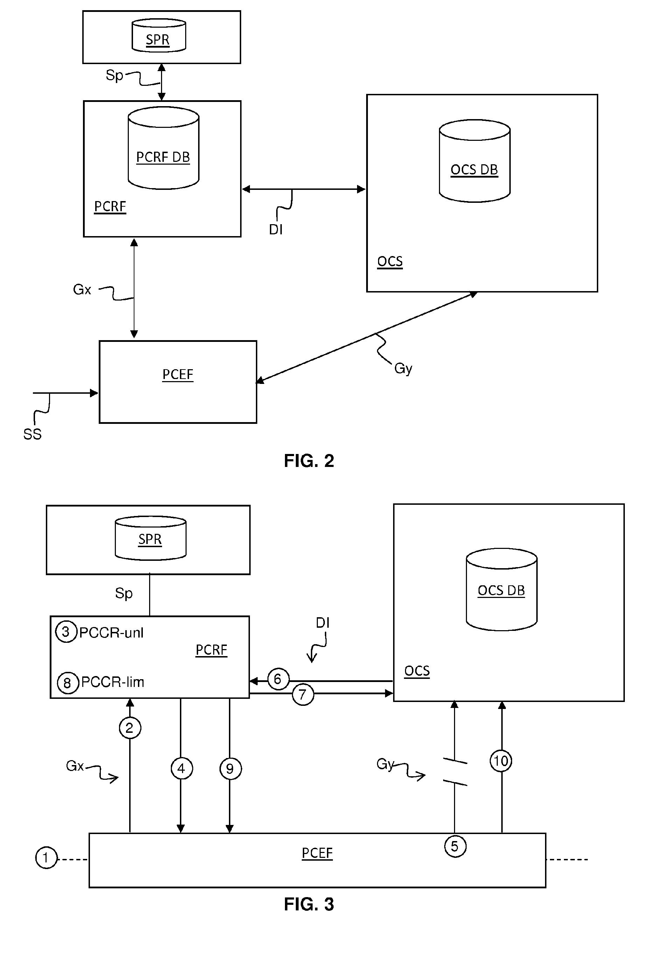

The evolved packet core EPC may further comprise and entity called the Policy Control and Charging Rules Function PCRF. The PCRF may interact with the PDN gateway P-GW and the gateway GPRS support node GGSN. The operation of the PCRF according to the invention will be explained in details with relationship to Figures 2 and 3.

When a user of a mobile radio-communication terminal TD1, TD2 or TDN uses the resources and services offered by the telecommunication networks operators, he may have various activities like a user to user communication (e.g. a single call, a data communication session, a short message), or a user to network communication (e.g. service profile administration), or an inter-network communication (e.g. transferring calls, signaling, or short messages), or a mobility (e.g. roaming or inter-system handover), etc... Each of these activities corresponding to resource usage may form a chargeable event that the involved telecommunication network(s) operator(s) want(s) to charge for. A charged party is a user involved in a chargeable event that has to pay parts or the whole charges of the chargeable event, or a third party paying the charges caused by one or all users involved in the chargeable event, or even a network operator.

Figures 2 and 3 are block diagrams schematically illustrating an embodiment of the policy-based charging system and method. A charging system and method implement a charging mechanism, namely a function whereby information related to a chargeable event is collected, formatted, transferred and evaluated in order to make it possible to determine usage for which the charged party may be billed (in particular in case of offline charging) or the subscriber's account balance may be debited (in particular in case of online charging).

The offline charging mechanism is a mechanism where the resource usage and the corresponding chargeable event(s) is(are) reported from the network to a billing domain after the resource usage has occurred. Thus, this charging mechanism does not affect, in real-time, the service rendered.

The online charging mechanism is a mechanism where chargeable event(s) is(are) collected concurrently with the resource usage. Further, authorization for the network resource usage is obtained prior to the actual resource usage to occur. Thus, this charging mechanism affects, in real-time, the service rendered.

The policy-based charging system comprises a Policy and Charging Enforcement Function PCEF, the policy control and charging rules function PCRF (shown on Figure 1) and an Online Charging System OCS.

The online charging system OCS is the entity performing the online charging mechanism namely the real-time credit control, transaction handling, rating, online correlation and management of subscriber accounts/balances. Such information related to the subscriber is stored in at least one online charging system database OCS DB.

The policy control and charging rules function PCRF is a functional element that encompasses policy control decision and flow based charging control functionalities. It determines, in real-time, policy and charging rules. The policy and charging rule function PCRF may be a software component comprising set of instructions run by a processor of a server operating in the evolved packet core EPC (see Figure 1). The policy and charging rule function PCRF may have an access to various databases PCRF DB related to the user subscription.

The policy and charging enforcement function PCEF is the functional element that encompasses policy enforcement and flow based charging functionalities. The policy and charging enforcement function PCEF is implemented either by the gateway GPRS support node GGSN (in 3G networks) or the PDN gateway P-GW (in 4G networks). The policy and charging enforcement function PCEF interacts with the policy and charging rule function PCRF through a Gx interface, and with the online charging system OCS through a Gy interface. After a user session SS has been established, the policy and charging enforcement function PCEF reports usage information to the online charging system OCS for online charging based on the information provided by the policy control and charging rules function PCRF.

The subscriber information can be located in various entities of the networks, or may be, for some parts of the data, duplicated in various entities of the networks. The subscriber information that may encompass the subscriber profile, the account status, the consumption status, the credit status, the subscription status may be maintained inside the online charging system OCS, in particular in the OCS databases OCS DB. The Subscriber Profile repository SPR can be configured to maintain some static information like the default quality of service QoS, bandwidth and static subscription information per subscriber. This part of the static information can be provisioned in the subscriber profile repository SPR by the customer relationship management CRM, the customer care, or the online charging system OCS, or a self care mechanism via the Sp interface. In this case, unlimited subscription characteristics and their subscription status per subscriber can be provisioned in the subscriber profile repository SPR. The policy and charging rule function PCRF can access the subscriber information contained in the subscriber profile repository SPR. The subscriber profile repository SPR is a logical entity that could be distributed across multiple network elements or consolidated in one element. It could be a separate entity or external subscriber profile repository SPR, or maintained in the Home Subscriber Server HSS or in the Home Location register HLR or even embedded in another entity. The subscriber profile repository SPR can be interrogated by the policy and charging rule function PCRF for the subscriber information in order to determine the appropriate policy rule that is configured for the associated unlimited subscriptions. Then, the policy and charging rule function PCRF transmit the policy and charging rule (PCC-Rule) to be applied by the policy and charging enforcement function PCEF.

A direct interface DI may also be provided between the online charging system OCS and the policy control and charging rules function PCRF. This direct interface can be implemented using Simple Object Access Protocol (SOAP) (Extensible Markup Language [XML]/Hypertext Transfer Protocol [HTTP]) or the Diameter protocol. The direct interface does not require any PCEF/GGSN/P-GW upgrade, neither at the Home Public Land Mobile Network HMPLN nor at the Visited Public Land Mobile Network VPLMN.

Figure 3 schematically illustrates the different steps of the policy-based charging method.

In a first step 1, a user session is established. This session is related to an unlimited usage. The unlimited usage is related either to an unlimited subscription that the user has subscribed before a telecommunication network operator, or a free data service, or a free uniform resource locator URL that the user wants to access during a session.

In a second step 2, the policy and charging enforcement function PCEF sends a Gx request towards the policy control and charging rules function PCRF for decision regarding the policy rule PCC-Rule to apply to this session SS.

In a third step 3, the policy control and charging rules function PCRF determines the PCC Rule to be applied to the session SS. This is performed by checking the subscriber information contained in the Subscription Profile Repository SPR through a Sp interface. The Sp interface allows the PCRF to request subscription information related to the IP-CAN (Internet Protocol Connectivity Access Network) transport level policies from the SPR based on a subscriber ID (e.g. the subscriber ID can be the IMSI namely the International Mobile Subscriber Identity), a packet data network PDN identifier and possible further IP-CAN session attributes. In the present example, the policy rule PCCR-unl corresponds to an unlimited subscription. Alternatively, it may also correspond to a free data service, or a free uniform resource locator URL as explained hereinafter.

The policy control and charging rules function PCRF may further takes into account (step not shown) the subscriber information contained in the online charging system database OCS DB. A subscriber information request may be sent through the direct interface DI from the PCRF to the OCS.

The matching between the unlimited subscription provisioned in the online charging system OCS and the one in the policy control and charging rules function PCRF may be based on service identifier or on Rating-Group-ldentification. Alternatively, the provisioning of the unlimited subscription in the online charging system OCS and in the policy control and charging rules function PCRF can be done separately with separate Application Programming Interface (APIs), or through a customer relationship management CRM mechanism, or a self-care mechanism, or a scheduling mechanism. The scheduling mechanism will trigger provisioning or activation event to provision or activate the unlimited subscription in the PCRF following its activation in OCS.

In the online charging system OCS, the unlimited subscription is provisioned with a service offer identification, a rating group identification and a rate plan. The rate plan could be that the user pays a defined amount per month for a monthly subscription for unlimited SMS, MMS or unlimited voice calls or unlimited data. The rate plan could also be that the user pays another defined amount per month for limited period subscription (having a start date and an end date) to have unlimited SMS or MMS, or unlimited voice calls or unlimited data calls or other unlimited service.

In the policy control and charging rules function PCRF, the unlimited subscription is provisioned by means of the association to a rating group identification that corresponds to a service offer identification of the subscription in the online charging system OCS. A policy rule may also be predefined for this rating group identification.

The policy rule for the rating group identification for unlimited subscription PCCR-unl should include the instruction to the policy and charging enforcement function PCEF to let any chargeable event during the session go through without triggering the online charging system OCS via the Gy/Ro interface.

Thus, when unlimited subscription is associated with a specific rating group identification within a pre-defined policy and charging rule in the policy control and charging rules function PCRF, this pre-defined rule specifies if the services requested by the user during the session related to a particular rating group identification are zero-rated or not. For a zero-rated rating group identification, the online charging system will not be involved in the charging of the requested services and there will be no interaction between the policy and charging enforcement function PCEF and the online charging system OCS.

In a fourth step 4, based on the PCC-Rule determination, a PCC-Rule enforcement information is sent by the policy control and charging rules function PCRF to the policy and charging enforcement function PCEF. The policy control and charging rules function PCRF answer is based on the policy plan or policy rule configured for this service offer with the rating group identification. The policy rule defined for unlimited subscription service offer (corresponding to unlimited subscription rating group identification free of charge) will configure or instruct the policy and charging enforcement function PCEF not to trigger the OCS system during the on-going session SS.

In a fifth step 5, at reception of policy rule PCCR-unl for this rating group identification associated with the unlimited subscription, the policy and charging enforcement function PCEF will execute the policy rule PCCR-unl according the corresponding configuration. Thus, the policy and charging enforcement function PCEF will not initiate any Gy/Ro credit control request CCR towards the online charging system OCS during the on-going session. As a consequence, there is neither instance handled by the online charging system OCS, nor any load generated at the online charging system OCS by the handling of the charging of the session associated to the unlimited subscription. Further, avoiding triggering the online charging system for unlimited subscription improves the network resources available for other tasks.

An unlimited subscription may have limitation with regards to period of time and location. An unlimited subscription may be recurrent (monthly, yearly, weekly, daily) or with limited validity period (start date and end date) or with limited location (only in the home network, not in visited network). Optionally, the policy-based charging method and system of the invention may take such situations into account. Thus, the unlimited subscription may be suspended, deactivated, and reactivated.

In a sixth step 6, the online charging system OCS notifies the policy control and charging rules function PCRF when unlimited subscription related to a user are suspended, renewed or reactivated. This may occur according to various situation, for example when an unlimited subscription has a validity period or cycle, or is only available for given calendar days, or only for given time-band, or only for given service offer, or only for given bearers, or only for a given location, or only for a given type of radio access network.

Optionally, in a seventh step 7, the policy control and charging rules function PCRF may notify acknowledgement of the suspension, renewal or reactivation notification to the online charging system OCS.

During the sixth step and seventh step, the PCRF is the server and the OCS is the client. This interaction enables the OCS to notify the PCRF when the unlimited subscription is modified during the session.

Further, in a situation where an unlimited subscription is activated in the online charging system OCS system via a customer relationship management CRM mechanism or a self care mechanism, the online charging system OCS will notify the policy control and charging rules function PCRF through the direct interface about the unlimited subscription. The notification will contain the service offer identification and the user identification. Advantageously, the policy control and charging rules function PCRF has already been provisioned with the corresponding service offer identification, rating group identification and corresponding policy rule PCCR-unl to apply.

In an eighth step 8, a subsequent PCC-Rule is determined by the policy control and charging rules function PCRF based on the suspension, renewal or reactivation notification of the ninth step 6. As an example, the subsequent PCC-Rule may be a policy rule related to the suspension of the unlimited subscription, thus the application of a limited subscription PCCR-lim.

In a ninth step 9, based on the subsequent PCC-Rule determination, a subsequent, yet actualized, PCC-Rule enforcement information is sent by the policy control and charging rules function PCRF to the policy and charging enforcement function PCEF.

In a tenth step 10, based on the subsequent PCC-Rule enforcement information corresponding to the application of a limited subscription rule PCCR-lim (taken as an example), the policy and charging enforcement function PCEF will initiate a Gy/Ro credit control request CCR towards the online charging system OCS during the on-going session for any chargeable event.

Obviously, when the status of the unlimited subscription stays unchanged, steps 8 to 10 do not occur.

The real-time interaction between the online charging system OCS, the policy control and charging rules function PCRF and the policy and charging enforcement function PCEF at session establishment as well as during the session enables dynamic policy-based charging. More precisely, it is possible to control the network resources in real time, and to adapt and modify resource allocation to the state of the users' subscriptions in conjunction with their charging profiles and service entitlements when unlimited subscriptions have certain limitation according to criteria as hereinbefore described.

The hereinbefore described example relates to a user having an unlimited subscription. However, the invention is applicable to any unlimited usage.

As an example, a user may subscribe a premium subscription including free data services and/or a set of free uniform resource locators URLs. In such case, the user is allowed to have access to free data services and/or a limited number of free uniform resource locators URLs through zero-rated Access Point Name APN. Unlimited free data services and/or free uniform resource locators URLs can be provisioned either in the subscriber profile repository SPR or in the policy control and charging rules function PCRF with associated policy and charging rule (PCC-Rule) that did not trigger the online charging system OCS. As a first alternative, the policy and charging enforcement function PCEF can also be configured with predefined policy and charging rules that match theses free services and/or free uniform resource locators URLs with a configured rating group corresponding to these free services and URLs. As another alternative, the subscriber profile repository SPR may be configured with service option including these free data services and URLs. The policy control and charging rules function PCRF may obtain the corresponding subscriber record at session establishment and thus map the free data services and URLs into predefined PCC rules and communicate them to the policy and charging enforcement function PCEF. The policy and charging enforcement function PCEF should not trigger the online charging system OCS when these free data services and uniform resource locators URLs are accessed during the session.

As another example, the above mentioned free data services or uniform resource locators URLs may be available to all subscribers in the OCS database without any constraint of subscription (premium subscription or the like). In this case, the policy control and charging rules function PCRF will activate predefined policy and charging rule related to free data services and/or URLs for all the subscribers without interrogating the subscriber profile repository SPR record based. The policy and charging rule will be based on a service identifier. The policy and charging rule is transmitted to the policy and charging enforcement function PCEF to instruct it not to trigger the online charging system OCS for any traffic associated with these free data services and/or uniform resource locators URLs.

As a further example, the above mentioned free data services or uniform resource locators URLs may be available for all subscribers but only within certain access point name APN. In this case, the policy control and charging rules function PCRF will activate predefined policy and charging rule related to free data services and/or URLs for all the subscribers using a defined access point name APN (related to a geographical area).

As still a further example, a similar principle can be applied to sponsored data service for advertisement purpose in specific location or geographical area enabling users to initiate session from a given location so as to access free data services and/or uniform resource locators URLs. The corresponding access can be completely free of charge or charged to an advertiser account of a sponsoring third party.

The drawings and their description hereinbefore illustrate rather than limit the invention.

Although a drawing shows different functional entities (e.g. OCS, PCEF, PCRF) as different blocks, this by no means excludes implementations in which a single entity carries out several functions, or in which several entities carry out a single function. In this respect, the drawings are very diagrammatic. The functions of the various elements shown in the Figures, including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "entity" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention.

The use of the term "real-time" should also encompass the notion of "near real-time": real time meaning that, for example, a charging and billing information is to be generated, processed, and transported to a desired conclusion in less than 1 second, while near real-time meaning that, for example, a charging and billing information is to be generated, processed, and transported to a desired conclusion in less than 1 minute.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. A policy-based charging system for charging telecommunication network usage by a user in a telecommunication network architecture comprising a policy and charging enforcement function (PCEF) entity, a policy control and charging rules function (PCRF) entity and an online charging system (OCS), the policy and charging enforcement function (PCEF) entity being coupled to the policy control and charging rules function (PCRF) entity and to the online charging system (OCS), wherein the policy and charging enforcement function (PCEF) entity is arranged to not trigger the online charging system (OCS) for any chargeable event related to an user session related to an unlimited usage.

2. The policy-based charging system of claim 1, wherein the policy control and charging rules function (PCRF) entity is arranged to provide a charging instruction to the policy and charging enforcement function (PCEF) entity to not trigger the online charging system (OCS) for any chargeable event related to an user session related to an unlimited usage.

3. The policy-based charging system of claim 1 or 2, wherein the policy control and charging rules function (PCRF) is coupled to the online charging system (OCS) through a direct interface (DI), the direct interface being adapted to transmit a notification from the online charging system (OCS) to the policy control and charging rules function (PCRF) when the unlimited usage is activated, suspended or renewed.

4. The policy-based charging system of claim 3, wherein the direct interface is a Diameter protocol based interface or a SOAP protocol based interface.

5. A policy control and charging rules function (PCRF) entity of a policy-based charging system according to anyone of the claims 1 to 4.

6. An online charging system (OCS) of a policy-based charging system according to anyone of the claims 1 to 4.

7. A policy and charging enforcement function (PCEF) entity of a policy-based charging system according to anyone of the claims 1 to 4.

8. A policy-based charging method for charging telecommunication network usage by a user in a telecommunication network architecture comprising a policy and charging enforcement function (PCEF), a policy control and charging rules function (PCRF) and an online charging system (OCS), the policy and charging enforcement function (PCEF) being coupled to the policy control and charging rules function (PCRF) and to the online charging system (OCS), wherein the policy and charging enforcement function (PCEF) do not trigger the online charging system (OCS) for any chargeable event related to an user session related to an unlimited usage.

9. The policy-based charging method of claim 8, wherein the unlimited usage is related to an unlimited subscription, or a free data service, or a free uniform resource locator URL, or a sponsored data service, or a sponsored uniform resource locator URL.

10. The policy-based charging method of claim 8 or 9, wherein the policy control and charging rules function (PCRF) provides a charging instruction to the policy and charging enforcement function (PCEF) to not trigger the online charging system (OCS) for any chargeable event related to an user session related to an unlimited usage.

11. The policy-based charging method of claim 8 or 9, further comprising the step of separately provisioning the unlimited usage in the online charging system (OCS) and in the policy control and charging rules function (PCRF) by means of at least one application, or a customer relationship management mechanism, or a self-care mechanism, or a scheduling mechanism.

12. The policy-based charging method according to anyone of the claims 8 to 11, further comprising the steps of:
- coupling directly the policy control and charging rules function (PCRF) to the online charging system (OCS),
- transmitting a notification from the online charging system (OCS) to the policy control and charging rules function (PCRF) when the unlimited usage is activated, suspended or renewed.

13. The policy-based charging method according to anyone of the claims 8 to 12, further comprising the step of matching the unlimited usage provisioned in the online charging system (OCS) and in the policy control and charging rules function (PCRF) is based on a rating group identification.

14. A computer program for a policy-based charging system, the system comprising at least a policy and charging enforcement function (PCEF) entity, a policy control and charging rules function (PCRF) entity and an online charging system (OCS) entity that are coupled to each other in a telecommunication network architecture, the computer program product comprising a set of instructions that, when loaded into a program memory of and run by anyone of the entities of the policy-based charging system, causes the system to carry out the steps of the policy-based charging method according to anyone of the claims 8 to 13.
